# EUROPEAN PATENT SPECIFICATION

(11) **EP 2 345 550 B1**
(45) Date of publication and mention of the grant of the patent: **20.03.2013**
(21) Application number: 11150674.7
(22) Date of filing: 12.01.2011
(51) Int. Cl.: B60H 1/00

(54) **Vehicular air-conditioning system**
Fahrzeugklimaanlage
Système de climatisation de véhicule

(30) Priority: 13.01.2010 JP 2010005117
(43) Date of publication of application: 20.07.2011
(73) Proprietor: Honda Motor Co., Ltd., Tokyo 107-8556 (JP)
(72) Inventor: Kobayashi, Satoshi, Saitama 351-0193 (JP); Esaki, Hidenori, Saitama 351-0193 (JP); Yamaoka, Daisuke, Saitama 351-0193 (JP)
(74) Representative: Herzog, Markus

(56) References cited:
- EP-A1- 0 913 281
- EP-A1- 0 913 282
- EP-A2- 0 888 912
- JP-A- 9 109 669
- US-B1- 6 230 505

## Description

### BACKGROUND OF THE INVENTION

### Field of the Invention:

The present invention relates to a heat-pump vehicular air-conditioning system for use on a vehicle for air-conditioning the passenger's cabin of the vehicle. Description of the Related Art:
Various vehicular air-conditioning systems have been used for use on various vehicles including engine vehicle powered by an internal combustion engine, hybrid vehicles powered by an engine and a secondary battery (or a secondary battery and a fuel cell), electric vehicles, and fuel cell vehicles, etc.

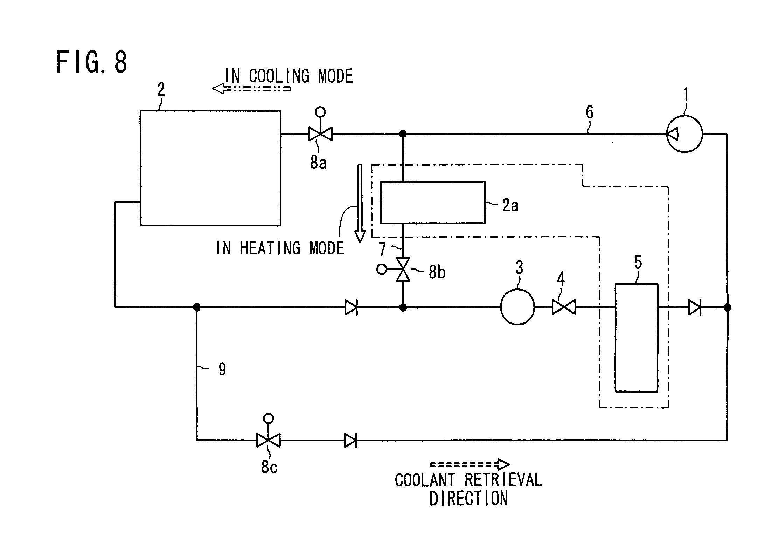

One of such vehicular air-conditioning systems is a heat-pump air-conditioning system. For example, as shown in FIG. 8 of the accompanying drawings, a cooling and heating system for use on automobiles as disclosed in Japanese Patent No. 3929606 includes a compressor 1, an exterior condenser 2, a liquid tank 3, an expansion valve 4, and an interior evaporator 5 which are connected successively in the order named by coolant pipes 6.

The cooling and heating system also includes a bypass pipe 7 for guiding a coolant discharged from the compressor 1 directly into the liquid tank 3 in bypassing relation to the exterior condenser 2. A first solenoid-operated valve 8a is connected to the coolant pipe 6 that is connected to the inlet of the exterior condenser 2. An interior condenser 2a and a second solenoid-operated valve 8b are connected to the bypass pipe 7.

When the cooling and heating system operates in a cooling mode, the first solenoid-operated valve 8a is opened and the second solenoid-operated valve 8b is closed to deliver the coolant discharged from the compressor 1 into the exterior condenser 2. When the cooling and heating system operates in a heating mode, the first solenoid-operated valve 8a is closed and the second solenoid-operated valve 8b is opened to send the coolant discharged from the compressor 1 into the bypass pipe 7.

The outlet of the exterior condenser 2 is directly connected to the inlet of the compressor 1 by a coolant retrieval pipe 9 which is connected to a third solenoid-operated valve 8c. When the heating mode is selected, the first solenoid-operated valve 8a, the second solenoid-operated valve 8b, and the third solenoid-operated valve 8c are controlled to retrieve the coolant which has remained in the exterior condenser 2 into a heating cycle.

According to Japanese Patent No. 3929606, a receiver cycle having the exterior condenser 2 and the liquid tank 3 which serves as a receiver tank is employed. Therefore, cavitation (evaporation of the liquid coolant) occurs in the liquid line, tending to cause an insufficient coolant flow rate with respect to the opening of the expansion valve 4.

The receiver cycle suffers from a relatively low cooling capability. If the cooling capability is to be increased, then the amount of coolant used and the weight of the cooling and heating system are increased, making the cooling and heating system less suitable for use on vehicles. Furthermore, the compressor 1 needs an increase in its ability, which is detrimental to the fuel economy of the vehicle that incorporates the cooling and heating system.

US 6 230 505 B1 discloses: an air-conditioning system for use on a vehicle, comprising:a heat pump circulation passage for circulating a coolant with a compressor (101); a condenser (103) disposed in the heat pump circulation passage, for performing a heat exchange between the coolant and ambient air; a first expansion valve (105a) disposed in the heat pump circulation passage, for depressurizing the coolant which is delivered from the condenser (103) via a first liquid tank (104a); a first evaporator (122) disposed in the heat pump circulation passage, for performing a heat exchange between the coolant which has passed through a second expansion valve (105b) and air-conditioning air; a heater (condenser (121)) disposed in the heat pump circulation passage, for performing a heat exchange between the coolant which is delivered from the compressor (101) and the air-conditioning air which has passed through the first evaporator (122); a second evaporator (112) disposed in a branch passage branched from the heat pump circulation passage, for performing a heat exchange between the coolant and a heating medium obtained from within or outside the vehicle; and a second liquid tank (104b) disposed downstream of the heater (121) and connected between the heater (121) and the second expansion valve (105b); wherein the heat pump circulation passage includes a coolant retrieval passage (R1) extending from a divider (between condenser 103 and valve V13) between the condenser (103) and the first liquid tank (104a) and connected to the heat pump circulation passage downstream of the heater (121) and upstream of the second liquid tank (104b).

EP 0 888 912 A2 discloses: an air-conditioning system for use on a vehicle, comprising: a heat pump circulation passage for circulating a coolant with a compressor (2); a condenser (3) disposed in the heat pump circulation passage, for performing a heat exchange between the coolant and ambient air; an expansion valve (26) disposed in the heat pump circulation passage, for depressurizing the coolant which is delivered from the condenser (3); a first evaporator (14) disposed in the heat pump circulation passage, for performing a heat exchange between the coolant which has passed through the expansion valve and air-conditioning air; a heater (13) disposed in the heat pump circulation passage, for performing a heat exchange between the coolant which is delivered from the compressor (2) and the air-conditioning air which has passed through the first evaporator (14); a second evaporator (22) disposed in a branch passage (28) branched from the heat pump circulation passage, for performing a heat exchange between the coolant and a heating medium obtained from within or outside the vehicle; and a liquid tank (24) and the second evaporator (22) are disposed downstream of the condenser (3) and connected between the condenser (2) and the expansion valve (26); wherein the heat pump circulation passage includes a coolant retrieval passage (6) extending from the compressor (2) to a divider between the condenser (3) and the liquid tank (24).

### SUMMARY OF THE INVENTION

It is an object of the present invention to provide a vehicular air-conditioning system which is of a simple and economical structure, allows a coolant to circulate stably, has an increased heat exchange efficiency, and is capable of maintaining a good air-conditioning capability.

According to the present invention, there is provided an air-conditioning system for use on a vehicle in accordance with claim 1.

The air-conditioning system also includes a gas-liquid separator and an auxiliary condenser which are disposed downstream of the condenser and connected between the condenser and the expansion valve, and the heat pump circulation passage includes a coolant retrieval passage extending from a divider between the condenser and the gas-liquid separator and connected to the compressor.

According to the present invention, the coolant that remains in the condenser is retrieved to the compressor due to a pressure difference which is developed in the coolant retrieval passage connected between the condenser and the gas-liquid separator. Therefore, the coolant that remains in the condenser is retrieved easily and quickly for effectively preventing from dropping in performance.

The auxiliary condenser is disposed downstream of the gas-liquid separator with the divider being disposed upstream thereof. The auxiliary condenser functions as an auxiliary cooling unit when the air-conditioning system operates in a cooling mode and a heating mode. There is no need for an auxiliary cooling unit to be used exclusively in the heating mode, for example.

Accordingly, it is possible for the air-conditioning system to circulate the coolant stably with a simple and economical arrangement and to operate with increased heat exchange efficiency for better air-conditioning capability.

The above and other objects, features, and advantages of the present invention will become more apparent from the following description when taken in conjunction with the accompanying drawings in which preferred embodiments of the present invention are shown by way of illustrative example.

### BRIEF DESCRIPTION OF THE DRAWINGS

FIG. 1 is a diagram, partly in block form, of a vehicular air-conditioning system according to a first embodiment of the present invention;
FIG. 2 is a diagram of the vehicular air-conditioning system shown in FIG. 1 which operates in a heating mode;
FIG. 3 is a flowchart of an operation sequence of the vehicular air-conditioning system shown in FIG. 1;
FIG. 4 is a diagram of the vehicular air-conditioning system shown in FIG. 1 which operates in a cooling mode;
FIG. 5 is a diagram, partly in block form, of a vehicular air-conditioning system according to a second embodiment of the present invention;
FIG. 6 is a diagram of the vehicular air-conditioning system shown in FIG. 5 which operates in a heating mode;
FIG. 7 is a diagram of the vehicular air-conditioning system shown in FIG. 5 which operates in a cooling mode; and
FIG. 8 is a diagram, partly in block form, of a cooling and heating system for use on automobiles as disclosed in Japanese Patent No. 3929606.

### DESCRIPTION OF THE PREFERRED EMBODIMENTS

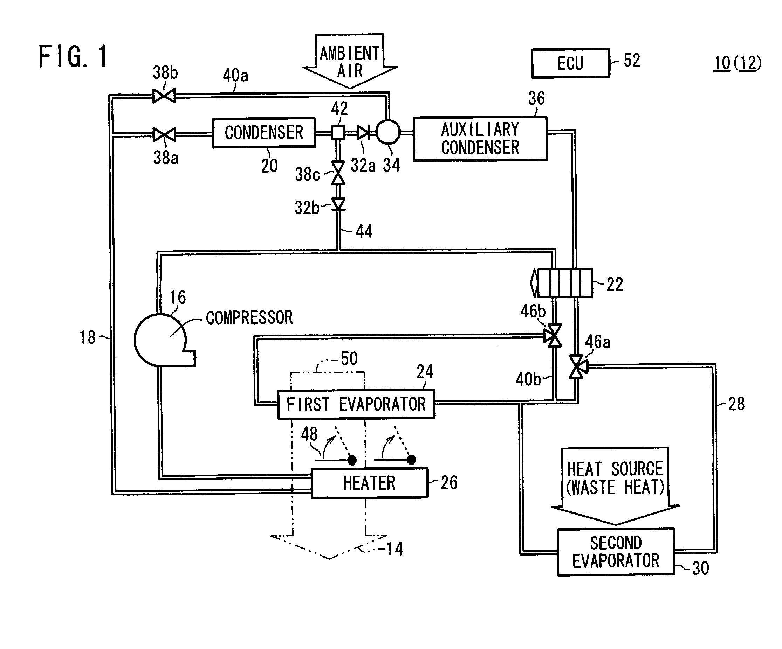

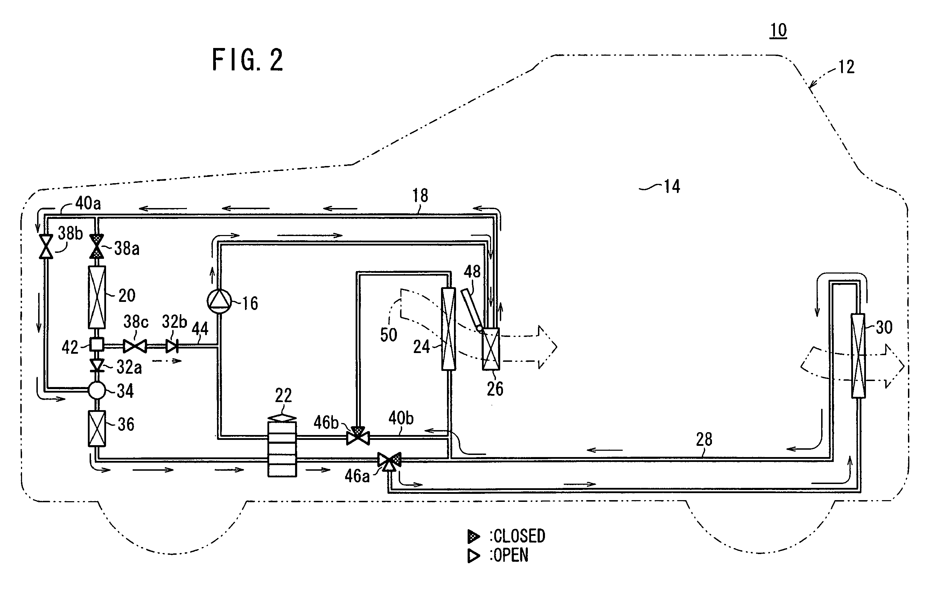

As shown in FIGS. 1 and 2, a vehicular air-conditioning system 10 according to a first embodiment of the present invention is mounted on an automobile (vehicle) 12 for air-conditioning a passenger's cabin (passenger compartment) 14 of the automobile 12.

The vehicular air-conditioning system 10 includes a heat pump circulation passage 18 through which a coolant is circulated by a compressor 16. To the heat pump circulation passage 18, there are connected a condenser 20 for performing a heat exchange between the coolant and the ambient air, an expansion valve 22 for depressurizing the coolant sent from the condenser 20, a first evaporator 24 for performing a heat exchange between the coolant that has passed through the expansion valve 22 and air-conditioning air, and a heater 26 for performing a heat exchange between the coolant which has been delivered from the compressor 16 and the air-conditioning air that has passed through the first evaporator 24.

A branch passage 28 is branched from the heat pump circulation passage 18 and connected to a second evaporator 30 for performing a heat exchange between the coolant and a heating medium obtained from within or outside the automobile 12, e.g., a heating medium discharged from the cabin 14 out of the automobile 12 (a waste heat gas from the cabin 14).

Since the heating medium supplied to the second evaporator 30 for a heat exchange is a waste heat gas from the cabin 14, the heat produced in the cabin 14 is not wasted but effectively utilized. When the vehicular air-conditioning system 10 starts to operate in a heating mode, the heat that is supplied to warm the cabin 14 is retrieved and introduced back into the vehicular air-conditioning system 10. Consequently, the vehicular air-conditioning system 10 can quickly start to operate.

A first backflow check valve (backflow check means) 32a, a gas-liquid separator 34, and an auxiliary condenser (auxiliary cooling condenser) 36 are successively disposed downstream of the condenser 20 and connected between the condenser 20 and the expansion valve 22. The first backflow check valve 32a serves to prevent the coolant from flowing from the gas-liquid separator 34 to the condenser 20. A solenoid-operated valve (on-off valve) 38a is disposed upstream of the condenser 20. The heat pump circulation passage 18 includes a first bypass passage 40a connected to the gas-liquid separator 34 in bypassing relation to the condenser 20. A solenoid-operated valve (on-off valve) 38b is connected to the first bypass passage 40a.

The heat pump circulation passage 18 also includes a coolant retrieval passage 44 extending from a divider 42 between the condenser 20 and the gas-liquid separator 34 and connected to the compressor 16. To the coolant retrieval passage 44, there are connected a second backflow check valve (backflow check means) 32b for preventing the coolant from flowing from the compressor 16 to the divider 42, and a solenoid-operated valve (on-off valve) 38c.

The expansion valve 22 has a means (not shown) for detecting the temperature of the coolant which is delivered from the first evaporator 24 that cools the air-conditioning air. The expansion valve 22 automatically changes its opening to change the flow rate of the coolant depending on the detected temperature of the coolant delivered from the first evaporator 24.

The heat pump circulation passage 18 has a three-way valve 46a connected at the junction between a portion of the heat pump circulation passage 18 which is positioned near and connected to the expansion valve 22 and an inlet end of the branch passage 28, and a three-way valve 46b connected at the junction between an outlet end of a second bypass passage 40b which bypasses the first evaporator 24 and the heat pump circulation passage 18. The second evaporator 30 is disposed in a rear portion of the automobile 12 (see FIG. 2).

An air-mixing damper 48 for delivering the air-conditioning air which has been cooled by the first evaporator 24 into the cabin 14 without flowing through the heater 26 is disposed between the first evaporator 24 and the heater 26.

The automobile 12 has an ambient air inlet 50 for introducing ambient air as air-conditioning air into the cabin 14. The first evaporator 24 and the heater 26 are disposed successively in the order named downstream of the ambient air inlet 50. The vehicular air-conditioning system 10 also includes a controller (ECU) 52 (see FIG. 1) for controlling overall operation of the vehicular air-conditioning system 10. The controller 52 also functions as a flow passage switching means for controlling the solenoid-operated valves 38a, 38b, 38c and the three-way valves 46a, 46b to switch between a heating mode and a cooling mode of the vehicular air-conditioning system 10.

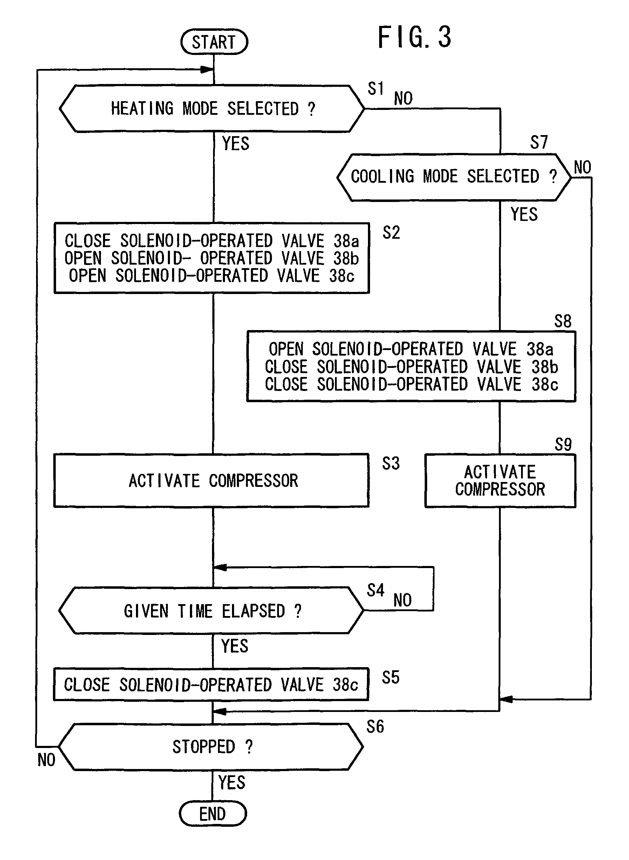

Operation of the vehicular air-conditioning system 10 will be described below with reference to a flowchart shown in FIG. 3.

First, it is determined whether the heating mode or the cooling mode of the vehicular air-conditioning system 10 is selected in step S1. If the heating mode is selected (YES in step S1), then control goes to step S2 in which the solenoid-operated valve 38a is closed and the solenoid-operated valves 38b, 38c are opened.

Then, the compressor 16 is activated in step S3. The compressor 16 now delivers the coolant into the heat pump circulation passage 18. The coolant is supplied to the heater 26 which performs a heat exchange between the coolant and the air-conditioning air, i.e., radiates the heat from the coolant to the air-conditioning air, thereby increasing the temperature of the air-conditioning air.

As the solenoid-operated valve 38a is closed and the solenoid-operated valve 38b is open, the coolant discharged from the heater 26 flows through the first bypass passage 40a into the gas-liquid separator 34 in bypassing relation to the condenser 20. The coolant is cooled while it flows through the gas-liquid separator 34 and the auxiliary condenser 36, and then is sent to the expansion valve 22.

The coolant is depressurized by the expansion valve 22 and flows through the three-way valve 46a into the branch passage 28, from which the coolant is introduced into the second evaporator 30. The second evaporator 30 performs a heat exchange between the coolant and the heat from the cabin 14. The coolant then flows from the second evaporator 30 and through the second bypass passage 40b and the expansion valve 22 in bypassing relation to the first evaporator 24, and is then delivered again to the compressor 16.

According to the first embodiment, the coolant retrieval passage 44 extends from the divider 42 between the condenser 20 and the gas-liquid separator 34 and is connected to the compressor 16, and the solenoid-operated valve 38c connected to the coolant retrieval passage 44 is open at this time.

When the compressor 16 is actuated while in the heating mode, a pressure difference is developed in the coolant retrieval passage 44. Specifically, in the coolant retrieval passage 44, the pressure at the compressor 16 is lower than the pressure at the divider 42. Therefore, the coolant in the form of a liquid which remains in the condenser 20 is forcibly drawn, i.e., retrieved, toward the compressor 16 through the coolant retrieval passage 44 due to the pressure difference in the coolant retrieval passage 44. Accordingly, the coolant in the form of a liquid which remains in the condenser 20 is easily and quickly retrieved, and the condenser 20 is prevented from dropping in performance.

In the heating mode, the heater 26 is connected downstream directly to the gas-liquid separator 34 in bypassing relation to the condenser 20. Therefore, the gas-liquid separator 34 functions as an auxiliary cooling tank, and the auxiliary condenser 36 functions as an auxiliary cooling unit.

The coolant is thus introduced as a fully liquid medium into the expansion valve 22, with any gas being prevented from being trapped therein. The coolant is thus stably circulated in the heat pump circulation passage 18 for higher heat exchange efficiency.

Since the gas-liquid separator 34 functions as an auxiliary cooling tank, a sufficient amount of coolant is maintained in the vehicular air-conditioning system 10. Consequently, the vehicular air-conditioning system 10 is prevented from dropping in air-conditioning performance due to a shortage of coolant while the vehicular air-conditioning system 10 is operating in a transient period.

In the first embodiment, there is no need for an auxiliary cooling tank and an auxiliary cooling unit to be used exclusively in the heating mode because the gas-liquid separator 34 and the auxiliary condenser 36 can be used also in the cooling mode. Accordingly, it is possible for the vehicular air-conditioning system 10 to circulate the coolant stably with a simple and economical arrangement and to operate with increased heat exchange efficiency for better air-conditioning capability.

If the compressor 16 has been actuated for a given time (prescribed time) (YES in step S4), then control goes to step S5 in which the solenoid-operated valve 38c is closed. Thus, the coolant stops being retrieved from the condenser 20, and the vehicular air-conditioning system 10 enters a normal heating mode. If it is judged that the heating mode is stopped (YES in step S6), then the vehicular air-conditioning system 10 is shut down.

If the heating mode is not selected (NO in step S1), then control goes to step S7 which determines whether the cooling mode of the vehicular air-conditioning system 10 is selected or not. If it is judged that the cooling mode is not selected (NO in step S7), then control jumps to step S6. If it is judged that the cooling mode is selected (YES in step S7), then control goes to step S8.

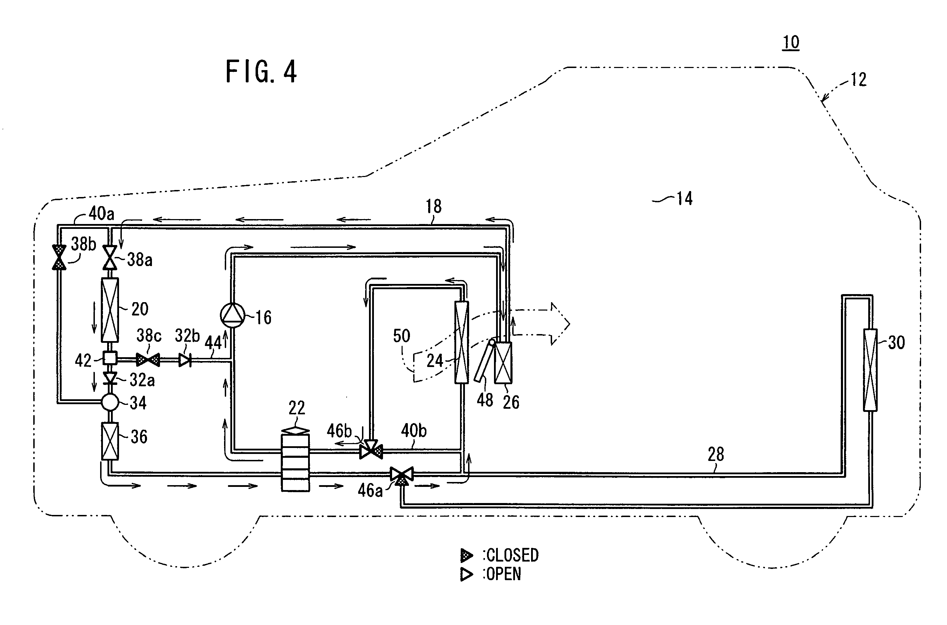

In step S8, the solenoid-operated valve 38a is opened and the solenoid-operated valves 38b, 38c are closed. Then, control goes to step S9 in which the compressor 16 is activated. The vehicular air-conditioning system 10 now starts to operate in the cooling mode, as shown in FIG. 4.

In the cooling mode, the solenoid-operated valve 38a is opened to connect the condenser 20 to the heat pump circulation passage 18. The three-way valves 46a, 46b are switched to disconnect the branch passage 28 from the heat pump circulation passage 18 and connect the first evaporator 24 to the heat pump circulation passage 18. The air-mixing damper 48 is brought into a fully closed position, i.e., a position to cover the heater 26.

The coolant which has been compressed and heated to a higher temperature by the compressor 16 flows through the heater 26 and is cooled by the condenser 20, the gas-liquid separator 34, and the auxiliary condenser 36. The coolant becomes lower in temperature and pressure in the expansion valve 22, and then is supplied to the first evaporator 24. The first evaporator 24 performs a heat exchange between the coolant which is lower in temperature and pressure and the air-conditioning air, thereby cooling the air-conditioning air. After having absorbed the heat from the air-conditioning air, the coolant is returned from the expansion valve 22 to the compressor 16.

Inasmuch as the air-mixing damper 48 is closed, the air-conditioning air cooled by the first evaporator 24 is not heated by the heater 26, and is introduced into the cabin 14, cooling the cabin 14. In the cooling mode, the gas-liquid separator 34 provides a damping action on the coolant as it increases or decreases in volume.

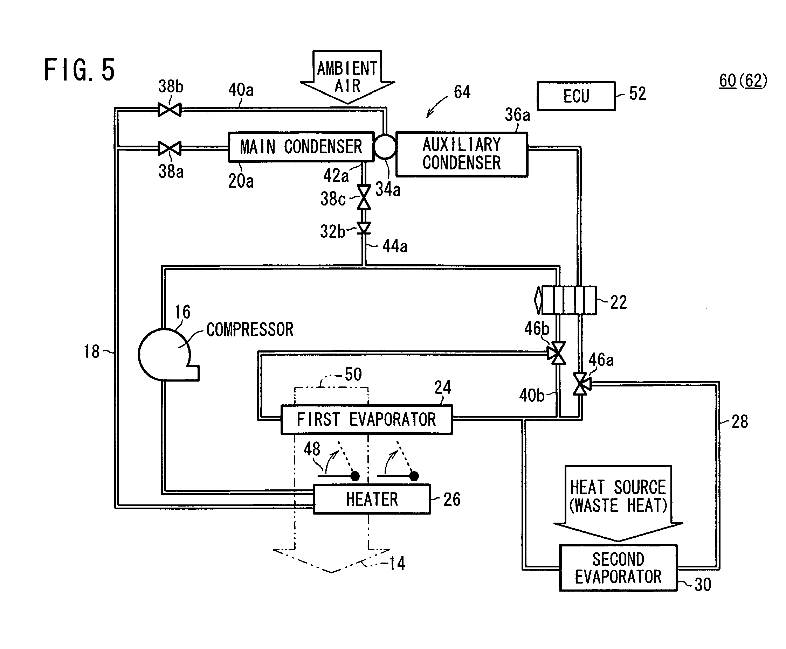

FIG. 5 is a diagram, partly in block form, of a vehicular air-conditioning system 60 according to a second embodiment of the present invention. Those parts of the vehicular air-conditioning system 60 which are identical to those of the vehicular air-conditioning system 10 according to the first embodiment are denoted by identical reference characters, and will not be described in detail below.

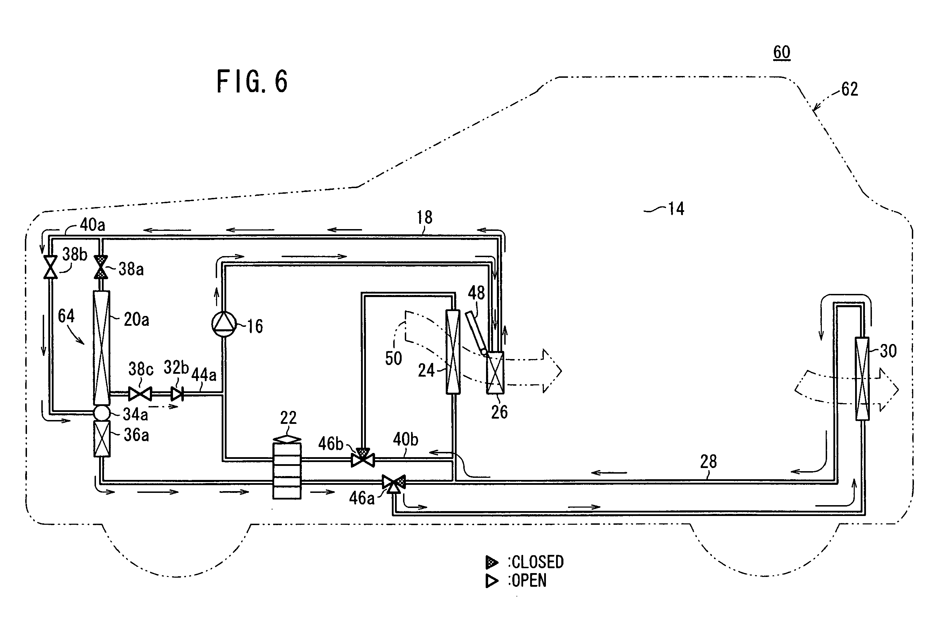

The vehicular air-conditioning system 60 is mounted on an automobile (vehicle) 62 (see FIG. 6). As shown in FIGS. 5 and 6, the heat pump circulation passage 18 includes a condenser unit 64 as an auxiliary cooling condenser, which provides an auxiliary cooling cycle. The condenser unit 64 is disposed downstream of the heater 26 and is connected in series thereto. The condenser unit 64 comprises a main condenser (condensing unit) 20a, a gas-liquid separating coolant storage (auxiliary cooling tank) 34a, and an auxiliary condenser (supercooling unit) 36a, through which the coolant flows in the cooling mode.

The heat pump circulation passage 18 includes a coolant retrieval passage 44a extending from a divider 42a at an end of the main condenser 20a and connected to the compressor 16. The second backflow check valve 32b and the solenoid-operated valve 38c are connected to the coolant retrieval passage 44a.

According to the second embodiment, the vehicular air-conditioning system 60 operates in the heating mode and the cooling mode according to the flowchart shown in FIG. 3, as with the vehicular air-conditioning system 10 according to the first embodiment.

When the vehicular air-conditioning system 60 operates in the heating mode, as shown in FIG. 6, the solenoid-operated valve 38a is closed and the solenoid-operated valves 38b, 38c are opened. In the heating mode, the coolant in the form of a liquid which remains in the condenser 20 is forcibly drawn toward the compressor 16 due to the pressure difference in the coolant retrieval passage 44a. Consequently, the vehicular air-conditioning system 60 according to the second embodiment offers the same advantages as the vehicular air-conditioning system 10 according to the first embodiment, e.g., it allows the coolant in the form of a liquid to be well and reliably retrieved.

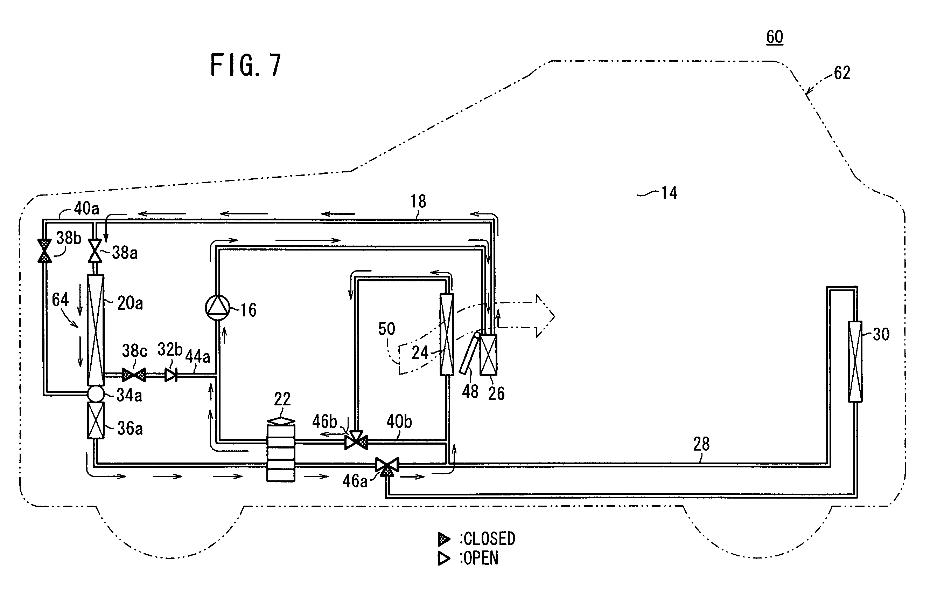

When the vehicular air-conditioning system 60 operates in the cooling mode, as shown in FIG. 7, the solenoid-operated valve 38a is opened and the solenoid-operated valves 38b, 38c are closed. Therefore, the vehicular air-conditioning system 60 according to the second embodiment offers the same advantages as the vehicular air-conditioning system 10 according to the first embodiment.

In each of the first and second embodiments, the heating medium supplied to the second evaporator 30 for a heat exchange may be any medium which is higher in temperature than the coolant that flows into the second evaporator 30, e.g., a medium heated by motors, a medium heated by batteries, a medium heated by an internal combustion engine if the automobile 12 or 62 is powered by such an internal combustion engine, a medium heated by the controller 52, a medium carrying ambient heat, or the like, in addition to the waste heat gas from the cabin 14.

Each of the three-way valves 46a, 46b may comprise an integral structure including a three-way dividing mechanism and a valve mechanism or a combination of a dividing block and a solenoid-operated valve.

A vehicular air-conditioning system (10) has a heat pump circulation passage (18) for circulating a coolant with a compressor (16). To the heat pump circulation passage (18), there are connected a condenser (20) for performing a heat exchange between a coolant and ambient air, an expansion valve (22), a first evaporator (24), a heater (26), and a second evaporator (30). The heat pump circulation passage (18) includes a coolant retrieval passage (44) extending from a divider (42) between the condenser (20) and the gas-liquid separator (34) and connected to the compressor (16). A second backflow check valve (32b) for preventing the coolant from flowing from the compressor (16) to the divider (42) and a solenoid-operated valve (38c) are connected to the coolant retrieval passage (44).

## Claims

1. An air-conditioning system for use on a vehicle, comprising:
a heat pump circulation passage (18) for circulating a coolant with a compressor (16);
a condenser (20) disposed in the heat pump circulation passage (18), for performing a heat exchange between the coolant and ambient air;
an expansion valve (22) disposed in the heat pump circulation passage (18), for depressurizing the coolant which is delivered from the condenser (20);
a first evaporator (24) disposed in the heat pump circulation passage (18), for performing a heat exchange between the coolant which has passed through the expansion valve (22) and air-conditioning air;
a heater (26) disposed in the heat pump circulation passage (18), for performing a heat exchange between the coolant which is delivered from the compressor (16) and the air-conditioning air which has passed through the first evaporator (24);
a second evaporator (30) disposed in a branch passage (28) branched from the heat pump circulation passage (18), for performing a heat exchange between the coolant and a heating medium obtained from within or outside the vehicle; and
a gas-liquid separator (34) and an auxiliary condenser (36) which are disposed downstream of the condenser (20) and connected between the condenser (20) and the expansion valve (22) ;
wherein the heat pump circulation passage (18) includes a coolant retrieval passage (44) extending from a divider (42) between the condenser (20) and the gas-liquid separator (34) and connected to the compressor (16),
a first on-off valve (38a) is disposed in the heat pump circulation passage (18) upstream of the condenser (20), a bypass passage (40a) connects the heat pump circulation passage (18) upstream of the first on-off valve (38a) to the gas-liquid separator (34) in bypassing relation to the condenser (20), a second on-off valve (38b) is disposed in the bypass passage (40a), and a third on-off valve (38c) is connected to the coolant retrieval passage (44);
wherein, in a heating mode, the first on-off valve (38a) is closed, the second on-off valve (38b) is opened and the third on-off valve (38c) is opened,
whereas in a cooling mode, the first on-off valve (38a) is opened, the second on-off valve (38b) is closed, and the third on-off valve (38c) is closed.

2. The air-conditioning system according to claim 1, further comprising backflow check means (32b) connected to the coolant retrieval passage (44), for preventing the coolant from flowing from the compressor (16) to the divider (42).

3. The air-conditioning system according to claim 1, further comprising a controller (52) for switching between the heating mode and the cooling mode and controlling opening and closing of the third on-off valve (38c);
wherein in the heating mode, the controller (52) opens the third on-off valve (38c) and thereafter activates the compressor (16) for a prescribed time and then closes the third on-off valve (38c).

4. The air-conditioning system according to claim 1, wherein the heating medium which is supplied to the second evaporator (30) for a heat exchange with the coolant comprises a medium which is higher in temperature than the coolant.

## Patentansprüche

1. Klimaanlagensystem zur Verwendung an einem Fahrzeug, umfassend:
einen Wärmepumpenkreislaufkanal (18) zum Umwälzen eines Kühlmittels mit einem Kompressor (16);
einen Kondensator (20), der in dem Wärmepumpenkreislaufkanal (18) angeordnet ist, zur Durchführung eines Wärmeaustauschs zwischen dem Kühlmittel und Umgebungsluft;
ein Expansionsventil (22), das in dem Wärmepumpenkreislaufkanal (18) angeordnet ist, zum Entspannen des Kühlmittels, das von dem Kondensator (20) abgegeben wird;
einen ersten Verdampfer (24), der in dem Wärmepumpenkreislaufkanal (18) angeordnet ist, zur Durchführung eines Wärmeaustauschs zwischen dem Kühlmittel, das durch das Expansionsventil (22) hindurch getreten ist, und Luftklimatisierungsluft;
einen Heizer (26), der in dem Wärmepumpenkreislaufkanal (18) angeordnet ist, zur Durchführung eines Wärmeaustauschs zwischen dem Kühlmittel, das von dem Kompressor (16) abgegeben wird, und
der Luftklimatisierungsluft, die durch den ersten Verdampfer (24) hindurch getreten ist;
einen zweiten Verdampfer (30), der in einem Zweigkanal (28) angeordnet ist, der von dem Wärmepumpenkreislaufkanal (18) abzweigt, zur Durchführung eines Wärmeaustauschs zwischen dem Kühlmittel und einem Heizmedium, das von innerhalb oder außerhalb des Fahrzeugs erhalten wird; und
einen Gasflüssigkeitsseparator (34) und einen Hilfskondensator (36), die stromab des Kondensators (20) angeordnet sind und zwischen dem Kondensator (20) und dem Expansionsventil (22) angeschlossen sind;
worin der Wärmepumpenkreislaufkanal (18) einen Kühlmittelwiedergewinnungskanal (44) enthält, der sich von einem Teiler (42) zwischen dem Kondensator (20) und dem Gasflüssigkeitsseparator (34) erstreckt und mit dem Kompressor (16) verbunden ist,
ein erstes Ein-/Aus-Ventil (38a) in dem Wärmepumpenkreislaufkanal (18) stromauf des Kondensators (20) angeordnet ist, ein Bypasskanal (40a) den Wärmepumpenkreislaufkanal (18) stromauf des ersten Ein-/Aus-Ventils (38a) mit dem Gasflüssigkeitsseparator (34) unter Umgehung des Kondensators (20) verbindet, ein zweites Ein-/Aus-Ventil (38b) in dem Bypasskanal (40a) angeordnet ist, und ein drittes Ein-/Aus-Ventil (38c) mit dem Kühlmittelwiedergewinnungskanal (44) verbunden ist;
worin, in einem Heizmodus, das erste Ein-/Aus-Ventil (38a) geschlossen ist, das zweite Ein-/Aus-Ventil (38b) geöffnet ist, und das dritte Ein-/Aus-Ventil (38c) geöffnet ist, wohingegen in einem Kühlmodus das erste Ein-/Aus-Ventil (38a) geöffnet ist, das zweite Ein-/Aus-Ventil (38b) geschlossen ist, und das dritte Ein-/Aus-Ventil (38c) geschlossen ist.

2. Das Klimaanlagensystem nach Anspruch 1, das ferner ein Rückstromsperrmittel (32b) aufweist, das mit dem Kühlmittelwiedergewinnungskanal (44) verbunden ist, um zu verhindern, dass das Kühlmittel von dem Kompressor (16) zu dem Teiler (42) fließt.

3. Das Klimaanlagensystem nach Anspruch 1, das ferner einen Controller (52) aufweist, zum Umschalten zwischen dem Heizmodus und dem Kühlmodus und zur Öffnungs- und Schließsteuerung des dritten Ein-/Aus-Ventils (38c);
worin in dem Heizmodus der Controller (52) das dritte Ein-/Aus-Ventil (38c) öffnet und danach den Kompressor (16) für eine vorbestimmte Zeit aktiviert und dann das dritte Ein-/Aus-Ventil (38c) schließt.

4. Das Klimaanlagensystem nach Anspruch 1, worin das Heizmedium, das dem zweiten Verdampfer (30) zum Wärmeaustausch mit dem Kühlmittel zugeführt wird, ein Medium aufweist, das eine höhere Temperatur hat als das Kühlmittel.

## Revendications

1. Système de climatisation de véhicule, comprenant:
un passage de circulation de pompe à chaleur (18) pour faire circuler un liquide de refroidissement avec un compresseur (16);
un condenseur (20) disposé dans le passage de circulation de pompe à chaleur (18), pour effectuer un échange de chaleur entre le liquide de refroidissement et l'air ambiant;
un détendeur (22) disposé dans le passage de circulation de pompe à chaleur (18), pour dépressuriser le liquide de refroidissement qui est fourni par le condenseur (20) ;
un premier évaporateur (24) disposé dans le passage de circulation de pompe à chaleur (18), pour effectuer un échange de chaleur entre le liquide de refroidissement qui est passé à travers le détendeur (22) et l'air de climatisation;
un dispositif de chauffage (26) disposé dans le passage de circulation de pompe à chaleur (18), pour effectuer un échange de chaleur entre le liquide de refroidissement qui est fourni par le compresseur (16) et l'air de climatisation qui est passé à travers le premier évaporateur (24);
un deuxième évaporateur (30) disposé dans un passage de dérivation (28) venant du passage de circulation de pompe à chaleur (18), pour effectuer un échange de chaleur entre le liquide de refroidissement et un fluide de chauffage obtenu de l'intérieur ou de l'extérieur du véhicule; et
un séparateur gaz-liquide (34) et un condenseur auxiliaire (36) qui sont disposés en aval du condenseur (20) et connectés entre le condenseur (20) et le détendeur (22);
dans lequel le passage de circulation de pompe à chaleur (18) comprend un passage d'extraction de liquide de refroidissement (44) s'étendant d'un diviseur (42) entre le condenseur (20) et le séparateur gaz-liquide (34) et connecté au compresseur (16),
une première vanne tout ou rien (38a) est disposée dans le passage de circulation de pompe à chaleur (18) en amont du condenseur (20), un passage de contournement (40a) connecte le passage de circulation de pompe à chaleur (18) en amont de la première vanne tout ou rien (38a) au séparateur gaz-liquide (34) en relation de contournement du condenseur (20), une deuxième vanne tout ou rien (38b) est disposée dans le passage de contournement (40a) et une troisième vanne tout ou rien (38c) est connectée au passage d'extraction de liquide de refroidissement (44);
dans lequel, dans un mode de chauffage, la première vanne tout ou rien (38a) est fermée, la deuxième vanne tout ou rien (38b) est ouverte et la troisième vanne tout ou rien (38c) est ouverte tandis que, dans un mode de refroidissement, la première vanne tout ou rien (38a) est ouverte, la deuxième vanne tout ou rien (38b) est fermée et la troisième vanne tout ou rien (38c) est fermée.

2. Système de climatisation suivant la revendication 1, comprenant en outre un moyen de contrôle d'écoulement en retour (32b) connecté au passage d'extraction de liquide de refroidissement (44), afin d'empêcher le liquide de refroidissement de s'écouler du compresseur (16) vers le diviseur (42).

3. Système de climatisation suivant la revendication 1, comprenant en outre un contrôleur (52) pour commuter entre le mode de chauffage et le mode de refroidissement et contrôler l'ouverture et la fermeture de la troisième vanne tout ou rien (38c); dans lequel, dans le mode de chauffage, le contrôleur (52) ouvre la troisième vanne tout ou rien (38c) et après cela active le compresseur (16) pendant un temps prescrit et ensuite ferme la troisième vanne tout ou rien (38c).

4. Système de climatisation suivant la revendication 1, dans lequel le fluide de chauffage qui est fourni au deuxième évaporateur (30) pour un échange de chaleur avec le liquide de refroidissement comprend un fluide qui a une température plus élevée que le liquide de refroidissement.
